(19) Europäisches Patentamt
European Patent Office
Office européen des brevets

(11) **EP 3 113 964 B1**

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(21) Anmeldenummer: **15704764.8**

(22) Anmeldetag: **09.02.2015**

(51) Int Cl.:
*B60G 17/027* (2006.01)     *B60G 17/033* (2006.01)
*B60G 17/056* (2006.01)     *B60G 15/06* (2006.01)
*B60G 11/58* (2006.01)     *F16F 9/096* (2006.01)
*B62K 25/04* (2006.01)     *B62K 25/28* (2006.01)

(86) Internationale Anmeldenummer:
**PCT/EP2015/052585**

(87) Internationale Veröffentlichungsnummer:
**WO 2015/132044 (11.09.2015 Gazette 2015/36)**

(54) **SCHWINGUNGSDÄMPFER MIT NIVEAUREGULIERUNG**

VIBRATION DAMPER WITH LEVEL CONTROL

AMORTISSEUR DE VIBRATIONS À CORRECTION D'ASSIETTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2014 DE 102014203892**
**11.04.2014 DE 102014207055**

(43) Veröffentlichungstag der Anmeldung:
**11.01.2017 Patentblatt 2017/02**

(73) Patentinhaber: **ZF Friedrichshafen AG**
**88046 Friedrichshafen (DE)**

(72) Erfinder:
• **BENDER, Burkhard**
**51570 Windeck (DE)**
• **KIRCHNER, Holger**
**53809 Ruppichteroth (DE)**
• **ACKERMANN, Norbert**
**53783 Eitorf (DE)**

(56) Entgegenhaltungen:
**EP-A2- 2 292 504       DE-A1- 10 360 516**
**DE-B3-102004 011 632       FR-A1- 2 401 037**
**FR-A1- 2 403 223       GB-A- 2 164 417**
**GB-A- 2 346 346       JP-U- S62 108 094**
**US-A- 6 076 814       US-B1- 6 318 525**

EP 3 113 964 B1

**Beschreibung**

Die Erfindung betrifft einen Schwingungsdämpfer mit Niveauregulierung und ein Verfahren zum Betrieb des Schwingungsdämpfers gemäß dem Oberbegriff von Patentanspruch 1.

Bei einem Motorrad besteht im Vergleich zu einem Auto die Besonderheit, dass die Fahrwerkeinstellung auch die Sitzposition beeinflusst. Insbesondere Menschen mit kurzen Beinen müssen vergleichsweise tief sitzen, um bei Stillstand des Motorrades einen gesicherten Stand zu haben. Die einfachste Möglichkeit besteht darin, den Sitz entsprechend tief einzustellen und das Fahrwerk getrennt zu betrachten. Die mechanische Verstellbarkeit des Sitzes ist vielfach sehr begrenzt.

Deshalb werden verstellbare Fahrwerkskomponenten verwendet. So ist es aus der DE 42 31 641 A1 bekannt, einen verstellbaren Federteller für eine mechanische Feder in der Bauform einer Schraubendruckfeder einzusetzen. Der Federteller wirkt mit einem Ringkolben zusammen, der durch Zufuhr von Dämpfmedium verstellt werden kann. Dadurch kann die Sitzhöhe auch in größerem Maß angepasst werden. Bei einer sich ändernden Beladungssituation, wenn z. B. eine weitere Person mitfährt, kann zwar durch den Einsatz von zusätzlichem Druckmedium die gewünschte Fahrwerkhöhe und damit die Sitzhöhe eingestellt werden, jedoch ändert sich das Fahrverhalten z. B. hinsichtlich der Schwingzahl, da die Fahrzeugfeder stärker vorgespannt ist.

Aus der GB 2 164 417 A ist ein Federungssystem, umfassend einen Federträger für eine Fahrzeugtragfeder bekannt. Ein die Fahrzeugtragfeder abstützender Federteller ist durch eine Druckmittelversorgung mit dem Ziel der Niveaueinstellung eines Fahrzeugaufbaus in seiner Position willkürlich einstellbar. Dabei ist der Federträger als eine hydropneumatische Feder ausgeführt ist, deren Hydraulikvolumen gegen eine pneumatisches Speicherelement ebenfalls einstellbar wobei das Druckmittel für die Federtellerverstellung und das Hydraulikmedium der hydropneumatischen Feder identisch sind.

Die Aufgabe der vorliegenden Erfindung besteht darin, eine Optimierung von Fahrwerkhöhe und Fahrverhalten zu erreichen.

Erfindungsgemäß wird die Aufgabe da die Merkmale des Patentanspruchs 1 gelöst. Damit verfügt das Federungssystem über zwei parallele Federungseinrichtungen, die für unterschiedliche Teilfunktionen eingesetzt werden. Einen Großteil der statischen Grundlast wird von dem verstellbaren Federteller übernommen. Eine Anpassung an die vom Federungssystem zu tragende Last erfüllt die hydropneumatische Feder. Die Gesamtfederrate ergibt sich aus der Summe der Einzelfederraten. Die Berechnung der Eigenfrequenz folgt der Formel

$$f = \sqrt{(C_{\text{mech-Feder}} + C_{\text{Hydro-Feder}}) / (\text{Grundlast} + \text{Zusatzlast})}$$

$C_{\text{mech-Feder}}$ ist ein konstanter Wert, auch wenn die Fahrzeugtragfeder mehr oder weniger stark vorgespannt ist.

Die Grundlast ist definiert, z. B. Fahrzeugmasse + 1 Person (75 Kg)

Die Zusatzlast kann einen positiven oder auch einen negativen Wert annehmen, wenn die Person beispielsweise leichter ist.

Die Federrate $C_{\text{Hydro-Feder}}$ kann der Belastung angepasst werden. Damit enthält die Gleichung im Zähler und im Nenner eine Variable, so dass eine Beschränkung der Eigenfrequenz auf eine schmale Bandbreite möglich ist. Bei einem Federungssystem ohne hydropneumatische würde sich die Eigenfrequenz deutlich ändern. Insgesamt würde sich dadurch das Schwingverhalten des Systems deutlicher verändern. Erfindungsgemäß ist vorgesehen, dass das Federungssystem für die Federtellerverstellung wie auch die Zufuhr von Hydraulikmedium für die hydropneumatische Feder eine gemeinsame Druckmittelpumpe aufweist. Damit können Komponenten eingespart werden.

Gemäß einem Unteranspruch weist das Federungssystem zumindest zwei Druckmittelleitungen zu den verstellbaren Aggregaten, eine Abflussleitung und eine Pumpleitung auf, wobei alle Leitungen durch eine Schaltventilanordnung ansteuerbar sind. Durch diesen einfachen Aufbau der Leitungsverbindungen können alle relevanten Zustände des Federungssystems sehr leicht nachgeführt werden. So kann man z.B. das gesamte Federungssystem blockieren, wenn ein quasi statischer Zustand vorliegt und keine Pumpleistung erforderlich ist.

Man kann vorsehen, dass die Schaltventilanordnung zumindest für zwei Druckmittelleitungen separate Schaltventile aufweist. Wenn alle Druckmittelleitungen mit separaten Schaltventilen ausgerüstet sind, dann kann man jede funktionale Ansteuerung des Federträgers nachbilden und dabei vergleichsweise einfache Schaltventile einsetzen.

Alternativ kann die Schaltventilanordnung von einem Schaltventilblock gebildet wird, so dass eine einfache Montage mit wenigen Hydraulikanschlussverbindungen möglich ist.

Gemäß einem vorteilhaften Unteranspruch ist die Druckmittelleitung zwischen einem Ringzylinder und einem Vorratsbehälter mit einer zumindest in Strömungsrichtung zu einem Vorratsbehälter wirksamen Drossel ausgestattet. Die Federtellerverstellung soll mit einem möglichst geringen Hydraulikvolumen verbunden sein. Dadurch ist eine schnelle Anpassung an die gewünschte Niveaulage möglich. Des Weiteren ist der Bauraumanspruch für das Hydrauliksystem tendenziell gering. Wenn dann jedoch eine momentan vorliegende Niveaulage abgesenkt werden soll, dann würde das einfache Ablassen von Hydraulikmedium zu einer unangenehm raschen Abwärtsbewegung führen. Dieser Effekt wird durch die besagte Drossel unterdrückt.

Im Hinblick auf eine einfache Sensortechnik ist der Federteller gegen einen Ausfahranschlag verstellbar. Beim Anfahren eines Anschlags stellt sich unmittelbar Stromanstieg in der Druckmittelpumpe an. Dieser Stromanstieg kann als Signal verwendet werden.

Bei einer bevorzugten Ausführung weist der axial bewegliche Federteller eine Stufengeometrie auf, die mit einer komplementären Stufengeometrie des Federträgers einen druckmittelgefüllten Ringzylinder bilden. Der Federteller bildet praktisch den Kolben und den äußeren Zylinder des Ringzylinders.

In weiterer vorteilhafter Ausgestaltung trägt der axial bewegliche Federteller zwei axial beabstandete Ringdichtungen, die den Ringzylinder endseitig abdichten. Eine Außenmantelfläche, in diesem Fall die Fläche des Federträgers lässt sich sehr viel leichter mit einer hohen Präzision und Oberflächengüte herstellen als eine Innenmantelfläche. Der Federteller der mit seiner Innenwandung auf dem Federteller gleitet weist axiale Abstützfläche auf, die lediglich die Vorspannung für die mindestens eine Ringdichtung erfüllen muss.

In weiterer vorteilhafter Ausgestaltung weist das Federungssystem eine Vorrangschaltung für die Druckmittelversorgung des verstellbaren Federtellers auf. Für den Fahrer ist das schnelle Erreichen der gewünschten Niveaulage wichtiger als das Erreichen eines konstanten Schwingungsverhaltens.

Für die optimale Nachführung des Federungssystems weist das Federungssystem für die Erfassung der Niveaulage einem Höhenstandsensor auf.

Im Hinblick auf eine kompakte Bauform des Federungssystems ist der Federträger als ein Schwingungsdämpfer ausgeführt.

Um das Federungssystem bestmöglich auszunutzen, weist der Schwingungsdämpfer mindestens ein verstellbares Dämpfventil auf. Darüber hinaus kann man das verstellbare Dämpfventil dafür ausnutzen, um bei einer Schwingbewegung die Niveauregelung zu unterstützen, in dem in die angestrebte Niveaurichtung eine besonders weiche und entgegen der angestrebten Niveaurichtung eine härtere Dämpfkrafteinstellung als notwendig vorgenommen wird.

Erfindungsgemäß ist des Weiteren vorgesehen, dass die hydropneumatische Feder bei konstanter Beladung und sich ändernde Fahrsituation hinsichtlich der Federrate konstant gehalten wird.

Für den Fahrer stellt sich ein berechenbares Fahrverhalten ein, auch wenn sich die Zuladung deutlich ändert.

Anhand der folgenden Figurenbeschreibung soll die Erfindung näher erläutert werden.

Fig. 1    Federungssystem, insbesondere für eine Motorradhinterachse

Fig. 2    Alternativausführung zur Fig. 1 mit einem Schaltventilblock

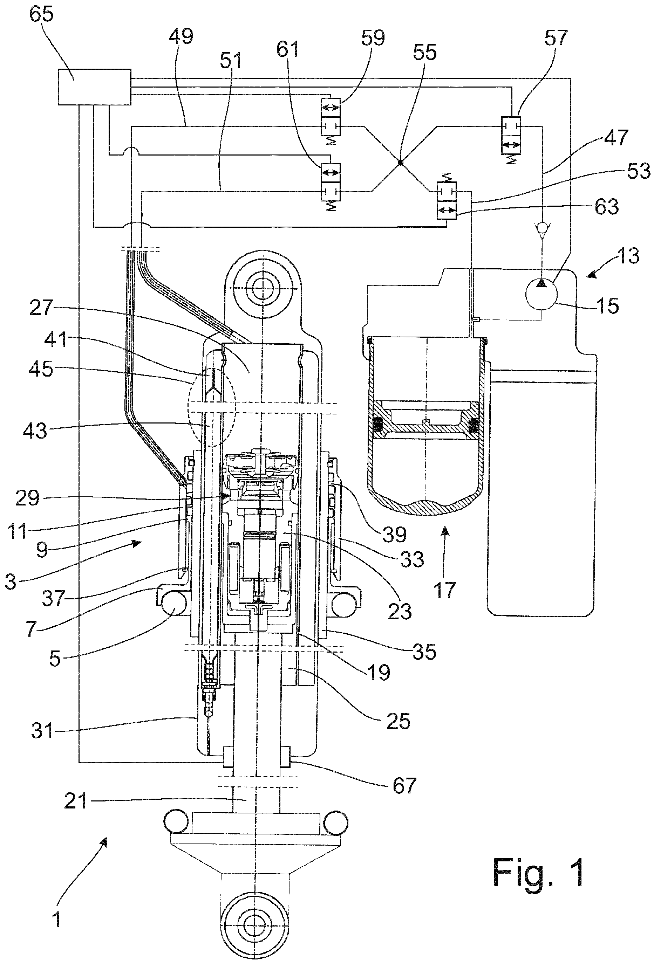

Die Figur 1 zeigt ein Federungssystem 1 für ein Fahrzeug, insbesondere einem Federungssystem für eine Motorradhinterachse. Das Federungssystem 1 umfasst einen Federträger 3 in der Bauform eines Schwingungsdämpfers. Eine Fahrzeugtragfeder 5 stützt sich auf einem Federteller 7 ab, der einen Ringkolben 9 aufweist, der in einem Ringzylinder 11 als Teil des Federträgers 3 mit dem Ziel der Niveauverstellung eines nicht dargestellten Fahrzeugaufbaus in seiner Position willkürlich einstellbar ist. Dazu verfügt der Ringzylinder 11 über eine Druckmittelversorgung 13, die zumindest eine Pumpe 15 und einen Vorratsbehälter 17 umfasst. Ein zweiter Federteller für die Fahrzeugtragfeder 5 kann kolbenstangenseitig oder direkt am Fahrzeugaufbau montiert sein.

Der Federträger 3 weist einen Zylinder 19 auf, in dem eine Kolbenstange 21 axial verschiebbar geführt ist. An der Kolbenstange 21 ist ein Kolben 23 befestigt, der den Zylinder 19 in einen kolbenstangenseitigen und einen kolbenstangenfernen Arbeitsraum 25; 27 unterteilt. Der Kolben 23 verfügt über ein verstellbares Dämpfventil 29, wie es beispielsweise aus der US 6 119 831 bekannt ist. Konzentrisch zum Zylinder 19 weist der Federträger 3 einen äußeren Behälter 31 auf, an dem auch der Ringzylinder 11 befestigt ist, der eine zum Behälter 31 eigenständige Baueinheit darstellt, also einen Außenzylinder 33 und einen Innenzylinder 35 umfasst, so dass der Ringkolben 9 nicht auf dem Behälter 31 des Schwingungsdämpfers 3 gleitet. Der Ringzylinder 11 verfügt über einen ersten Anschlag 37, gebildet beispielsweise von einem Sicherungsring, der die maximale Ausfahrposition des Ringkolbens 9 bestimmt. Ein Boden 39 des Ringzylinders 11 definiert die maximale Einfahrposition des Ringkolbens 9.

Zwischen dem Zylinder 19 und dem Behälter 31 des Schwingungsdämpfers 3 ist ein ringförmiger Ausgleichsraum 41 für das von der ein- und ausfahrenden Kolbenstange 21 verdrängte Druckmedium in den Arbeitsräumen 25; 27 angeordnet. In dem Ausgleichsraum 41 ist ein Speicherelement 43 mit einer Druckgasfüllung angeordnet. Das Speicherelement 43 bildet zusammen mit dem druckmittelgefüllten Ausgleichsraum 41 eine verstellbare hydropneumatische Feder 45, die funktional parallel zur Fahrzeugtragfeder 5 eine Kraft in Ausfahrrichtung der Kolbenstange 21 ausübt.

Der Schwingungsdämpfer ist über eine Druckmittelleitung 47 -53 mit der Pumpe 15 und dem Vorratsbehälter 17 verbunden, so dass die Federtellerverstellung 9; 11 wie auch die hydropneumatische Feder 45 eine gemeinsame Druckmittelpumpe 15 nutzen. Folglich sind das Druckmittel im Ringzylinder 11 und in den Arbeitsräumen 25; 27 sowie im Ausgleichsraum 41 des Schwingungsdämpfers 1 identisch. Beispielhaft ist der Anschluss der Druckmittelleitung 51 im kolbenstangenfernen Arbeitsraum 27 ausgeführt. Man kann alternativ auch den Ausgleichsraum 41 heranziehen.

Die Druckmittelleitungen 49; 51, eine Abflussleitung 53 zum Vorratsbehälter 17 und eine Pumpleitung 47 sind beispielhaft an einen Kreuzpunkt 55 angeschlossen und weisen jeweils Schaltventile 57 - 63 auf, die zumindest eine Auf-Zu-Funktion erfüllen. Optional kann das Federungssystem eine Vorrangschaltung für die Druckmittelversorgung des verstellbaren Federtellers 7 aufweisen. Diese Vorrangschaltung kann durch eine Software in einem Steuergerät 65 oder auch durch eine klassische Hydraulikschaltung gelöst sein.

Das Federungssystem 1 verfügt für die Positionserfassung des Ringkolbens 9 über eine sehr einfache Sensorik. Die beiden Anschläge 37; 39 des Ringzylinders 11 dienen als Referenzpunkte und können beispielsweise durch eine Stromspitze beim Pumpenantrieb 15 erfasst werden.

Für die hydropneumatische Feder 45 kommt für die Erfassung der Niveaulage beispielsweise ein Höhenstandsensor 67 zur Anwendung, der zur exakten Messung geeignet ist.

Beim Start des Fahrzeugs bzw. Motorrads und damit des Federungssystems 1 wird über die Vorrangschaltung Druckmittel aus dem Vorratsbehälter 17 in den Ringzylinder 11 gepumpt. Dadurch wird der Aufbau des Motorrades angehoben, bis der erste Anschlag 37 erreicht ist. Die Auslegung der Fahrzeugtragfeder 5 und die Grundposition des Federtellers 7 sind derart gewählt, dass die Fahrzeugtragfeder 5 den wesentlichen Anteil, aber nicht die gesamte Grundlast trägt. Damit ist bestimmt, dass der Ringkolben 9 zusammen mit dem Federteller 7 stets am ersten Anschlag 37 anliegt, um die gewünschte Niveaulage für einen Fahrbetrieb zu erreichen. Ein Teilbeitrag für die Abstützung des Motorradaufbaus übernimmt die hydropneumatische 45. Die Druckmittelzufuhr für den Ringzylinder 11 kann über das Schaltventil 49 gesperrt und vollständig zur Vorspannung der hydropneumatischen Feder 45 genutzt werden. Dadurch fährt die Kolbenstange 21 weiter aus, bis die gewünschte Niveaulage erreicht wird. Die tatsächliche Niveaulage wird von dem Höhenstandsensor 67 erfasst, der vergleichsweise einfach aufgebaut sein kann, da vornehmlich eine quasi statische Regelung durchgeführt wird, bei der das Motorrad bei sich ändernder Beladung hinsichtlich seiner Niveaulage auf einen statischen Fahrzeugstand wie z. B. Stillstand, Hochgeschwindigkeit oder Geländefahrt nachjustiert wird.

Ist die gewünschte Niveaulage erreicht, dann kann die gesamte Druckmittelversorgung über die Schaltventile 47 - 53 gesperrt werden, so dass für den Betrieb des Federungssystems 1 keine Fremdenergie erforderlich ist. Der Pumpvorgang für die hydropneumatische Feder 45 kann durch den Einsatz des verstellbaren Dämpfventils 29 gefördert werden, indem für die Kolbenstangenausfahrbewegung die Dämpfkraft bei einer Kolbenstangenausfahrbewegung minimiert und bei einer Kolbenstangeneinfahrbewegung in den Zylinder 19 maximiert wird. Dadurch kann die Wirkung der hydraulischen Pumpe unterstützt werden, wofür praktisch kein nennenswerter Energieeinsatz notwendig ist.

Ändert sich z.B. die gewünschte Niveaulage, dann kann durch schnelles Ablassen von Druckmittel ausschließlich aus dem Ringzylinder 11 die neue Niveaulage erreicht werden, beispielsweise von einer Geländefahrt auf eine Hochgeschwindigkeitsfahrt. Die Einstellung der hydropneumatischen Feder 45 bleibt unverändert. Die Niveaulage ändert sich, jedoch nicht das Schwingverhalten, da die Eigenfrequenz des Federungssystems 1 unverändert bleibt.

Wird die Zuladung erhöht, dann würde die Kolbenstange 21 einsinken und vom Höhenstandsensor 67 eine Abweichung zur angestrebten Niveaulage festgestellt. Der Ringkolben 9 liegt weiterhin am ersten Anschlag 37 an. Zur Erreichung der Niveaulage wird nun Druckmittel aus dem Vorratsbehälter 17 in den Ausgleichsraum 41 gepumpt, um die Vorspannung auf den Speicher 43 zu erhöhen und eine größere Ausschubkraft auf die Kolbenstange 21 zu erreichen. Gleichzeit wird damit auch die Eigenfrequenz wieder auf ein angestrebtes Maß angehoben.

Grundsätzlich wäre es möglich, dass die hydropneumatische Feder 45 sowohl für eine sich ändernde Beladung wie auch zur Änderung der Niveaulage bei veränderter Fahrsituation herangezogen wird. Es ist aber ganz bewusst vorgesehen, dass die hydropneumatische Feder 45 bei konstanter Beladung und sich ändernde Fahrsituation hinsichtlich der Federrate konstant gehalten wird. Die Änderung der Niveaulage über den Ringzylinder 11 erfolgt deutlich schneller, da aufgrund der vorliegenden Abmessungen weniger Druckmittelmedium zur Veränderung eingesetzt werden muss als zur Änderung der Vorspannung der hydropneumatischen Feder 45.

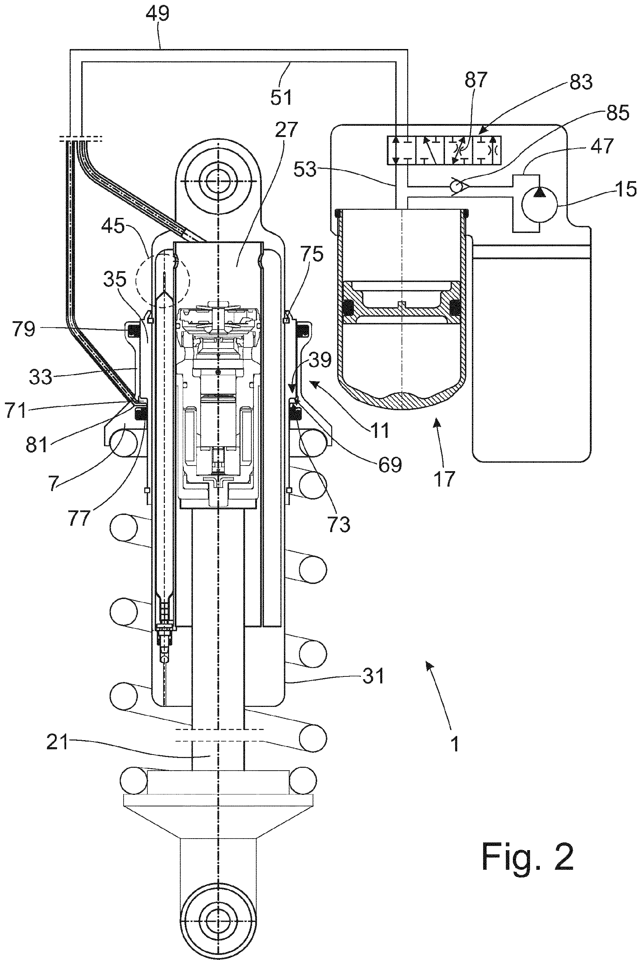

Die Figur 2 zeigt eine Abwandlung des Federungssystems 1, das demselben Funktionsprinzip wie die Variante nach Fig. 1 folgt. Ein konstruktiver Unterschied besteht in der Ausgestaltung des Ringzylinders 11. Der axial bewegliche Federteller 7 bildet den Außenzylinder 33 und weist eine Stufengeometrie auf. Der am Behälter 31 befestigte Innenzylinder 35 verfügt über eine komplementären Stufengeometrie, so das der Außenzylinder 33 des Federtellers 7 und der Innenzylinder 35 des Federträgers den druckmittelgefüllten Ringzylinder 11 bilden. Der Innenzylinder 35 bildet mit seiner Stufe 69 den Boden 39 des Ringzylinders 11, der zur Druckabstützung im Druckraum 71 dient. Eine nach radial innen gerichtete endseitige Stufe 73 des Außenzylinders 33 bzw. des Federtellers 7 übernimmt die Funktion des Kolbens gemäß der Fig. 1. Die axiale Abstützung des Innenzylinders 35 am Behälter 31 erfolgt über einen Sicherungsring 75, der in einer Nut des Behälters 31 gekammert ist.

Der Innenzylinder bildet mit seiner Außenmantelfläche eine Gleitbahn für zwei axial beabstandete Ringdichtungen 77; 79, die der Federteller 7 bzw. der Außenzylinder 33 in Ringnuten trägt und die den Ringzylinder 11 endseitig abdichten. Eine radiale Nut 81 in der Stufe 73 des Außenzylinders 33 sorgt für eine Anströmung mit dem Hydraulikmedium, auch wenn die endseitige Stufe 73 des Federtellers 7 auf der Stufe 69 bzw. dem Boden 39 des Innenzylinders 35 zur Anlage kommen sollte.

Ein weiterer Unterschied zur Fig. 1 besteht in der Ausgestaltung der Schaltventilanordnung. In der Fig. 1 weist die Schaltventilanordnung 57 - 63 zumindest für zwei Druckmittelleitungen separate Schaltventile aufweist, in der Variante sogar für jede Druckmittelleitung ein separates Schaltventil. In der Fig. 2 wird die Schaltventilanordnung von einem Schaltventilblock 83 mit vier Anschlüssen und vier Schaltstellungen gebildet.

In der eingezeichneten ersten Schaltposition ist der kolbenstangenferne Arbeitsraum 27 mit dem Vorratsbehälter 17 verbunden und der Ringzylinder 11 ist zum Vorratsbehälter und zur Pumpe blockiert. Die hydropneumatische Feder 45 kann sich in Richtung des Vorratsbehälters 17 entspannen. Das von der einfahrenden Kolbenstange 21 verdrängte Dämpfmedium kann direkt in den Vorratsbehälter 17 abfließen. Die nächste Schaltstellung dient zur Vorspannung der hydropneumatischen Feder 45. Der Ringzylinder 11 bzw. die Federtellerverstellung ist blockiert. Ebenso der Anschluss des Vorratsbehälters 17 bzw. die Verbindung zwischen den Druckmittelleitungen 49; 53. Wenn die Pumpe 15 außer Betrieb ist, dann ist das gesamte Federungssystem 1 stillgesetzt, da der Ringzylinder 11 sowohl von der Pumpe 15 wie auch vom Vorratsbehälter 17 getrennt ist und ein Rückfluss aus der hydropneumatischen Feder 45 oder dem Schwingungsdämpfer wegen eines geschlossenen Rückschlagventils 85 zwischen dem Schaltventilblock 83 und der Pumpe 15 ebenfalls blockiert ist. Diese Schaltstellung ist insbesondere für eine konstante Beladungssituation interessant, um den Energieeinsatz zu minimieren.

Die dritte Schaltstellung ist für das Absenken der Niveaulage vorgesehen, bei der Hydraulikmedium aus dem Ringzylinder 11 in den Vorratsbehälter 15 abfließen soll. Dabei ist die hydropneumatische Feder 45 blockiert und auch die Befüllung durch die Pumpe 15 ist gesperrt. In dem Schaltventilblock 83 ist eine Drossel 87 angeordnet, die ein überschnelles Absenken des Federtellers 7 verhindert.

In der vierten Schaltstellung wird der Ringzylinder 11 zur Verstellung des Federtellers 7 mit Hydraulikmedium gefüllt und die hydropneumatische Feder 45 ist blockiert. Die beiden Schaltstellungen 1 und 2 betreffen die Ansteuerung der hydropneumatischen Feder 45 und die Schaltstellungen 3 und 4 die Ansteuerung des Ringzylinders 11. Aufgrund der gruppierten Anordnung der Schaltstellungen sind kurze Schaltwege möglich.

Bezugszeichen

| | |
|---|---|
| 1 | Federungssystem |
| 3 | Federträger |
| 5 | Fahrzeugtragfeder |
| 7 | erster Federteller |
| 9 | Ringkolben |
| 11 | Ringzylinder |
| 13 | Druckmittelversorgung |
| 15 | Pumpe |
| 17 | Vorratsbehälter |
| 19 | Zylinder |
| 21 | Kolbenstange |
| 23 | Kolben |
| 25 | kolbenstangenseitiger Arbeitsraum |
| 27 | kolbenstangenferner Arbeitsraum |
| 29 | verstellbares Dämpfventil |
| 31 | Behälter |
| 33 | Außenzylinder |
| 35 | Innenzylinder |
| 37 | erster Anschlag |
| 39 | Boden |
| 41 | Ausgleichsraum |
| 43 | Speicherelement |
| 45 | hydropneumatische Feder |
| 47 | Pumpleitung |
| 49 | Druckmittelleitung |
| 51 | Druckmitelleitung |
| 53 | Abflussleitung |
| 55 | Kreuzpunkt |
| 57 | Schaltventil |
| 59 | Schaltventil |
| 61 | Schaltventil |

| 63 | Schaltventil |
| 65 | Steuergerät |
| 67 | Höhenstandsensor |
| 69 | Stufe |
| 71 | Druckraum |
| 73 | endseitige Stufe |
| 75 | Sicherungsring |
| 77; 79 | Ringdichtungen |
| 81 | Nut |
| 83 | Schaltventilblock |
| 85 | Rückschlagventil |
| 87 | Drossel |

**Patentansprüche**

1. Federungssystem (1), umfassend einen Federträger (3) für eine Fahrzeugtragfeder (5), wobei ein die Fahrzeugtragfeder (5) abstützender Federteller (7) durch eine Druckmittelversorgung (47 - 63) mit dem Ziel der Niveaueinstellung eines Fahrzeugaufbaus in seiner Position willkürlich einstellbar ist, wobei der Federträger (3) als eine hydropneumatische Feder (45) ausgeführt ist, deren Hydraulikvolumen gegen eine pneumatisches Speicherelement (43) ebenfalls einstellbar ist, das Druckmittel für die Federtellerverstellung (9; 11) und das Hydraulikmedium der hydropneumatischen Feder (45) identisch sind, **dadurch gekennzeichnet, dass** das Federungssystem für die Federtellerverstellung (9; 11; 45 - 63) wie auch die Zufuhr von Hydraulikmedium für die hydropneumatische Feder (45) eine gemeinsame Druckmittelpumpe (15) aufweist.

2. Federungssystem nach Anspruch 1, **dadurch gekennzeichnet, dass** das Federungssystem (1) zumindest zwei Druckmittelleitungen zu den verstellbaren Aggregaten (49; 51), eine Abflussleitung (53) und eine Pumpleitung (47) aufweist, wobei alle Leitungen (47 - 53) durch eine Schaltventilanordnung (57 - 63; 83) ansteuerbar sind.

3. Federungssystem nach Anspruch 1, **dadurch gekennzeichnet, dass** die Schaltventilanordnung (57 - 63) zumindest für zwei Druckmittelleitungen (47 - 53); separate Schaltventile (57 - 63) aufweist.

4. Federungsanordnung nach Anspruch 1, **dadurch gekennzeichnet, dass** die Schaltventilanordnung von einem Schaltventilblock (83) gebildet wird.

5. Federungsanordnung nach Anspruch 1, **dadurch gekennzeichnet, dass** eine Druckmittelleitung (49) zwischen einem Ringzylinder (11) und einem Vorratsbehälter (17) mit einer zumindest in Strömungsrichtung zu einem Vorratsbehälter (17) wirksamen Drossel (87) ausgestattet ist.

6. Federungssystem nach Anspruch 1, **dadurch gekennzeichnet, dass** der Federteller (7) gegen einen Ausfahranschlag (37) verstellbar ist.

7. Federungssystem nach Anspruch 1, **dadurch gekennzeichnet, dass** der axial bewegliche Federteller (7) eine Stufengeometrie (73) aufweist, die mit einer komplementären Stufengeometrie (69) des Federträgers (3) einen druckmittelgefüllten Ringzylinder (11) bilden.

8. Federungssystem nach Anspruch 7, **dadurch gekennzeichnet, dass** der axial bewegliche Federteller (7) zwei axial beabstandete Ringdichtungen (77; 79) trägt, die den Ringzylinder (11) endseitig abdichten.

9. Federungssystem nach Anspruch 1, **dadurch gekennzeichnet, dass** das Federungssystem eine Vorrangschaltung für die Druckmittelversorgung des verstellbaren Federtellers (7) aufweist.

10. Federungssystem nach Anspruch 1, **dadurch gekennzeichnet, dass** das Federungssystem (1) für die Erfassung der Niveaulage einem Höhenstandsensor (67) aufweist.

11. Federungssystem nach Anspruch 1, **dadurch gekennzeichnet, dass** der Federträger (3) als ein Schwingungsdämpfer ausgeführt ist.

**12.** Federungssystem nach Anspruch 11, **dadurch gekennzeichnet, dass** der Schwingungsdämpfer mindestens ein verstellbares Dämpfventil (29) aufweist.

**13.** Verfahren zum Betrieb eines Federungssystems nach Anspruch 1, **dadurch gekennzeichnet, dass** die hydropneumatische Feder (45) bei konstanter Beladung und sich ändernde Fahrsituation hinsichtlich der Federrate konstant gehalten wird.

**Claims**

**1.** Suspension system (1), comprising a spring support (3) for a vehicle suspension spring (5), it being possible for the position of a spring collar (7) which supports the vehicle suspension spring (5) to be set arbitrarily by means of a pressure medium supply (47-63) with the aim of setting the ride height of a vehicle body, the spring support (3) being configured as a hydropneumatic spring (45), the hydraulic volume of which can likewise be set with respect to a pneumatic accumulator element (43), the pressure medium for the spring collar adjustment means (9; 11) and the hydraulic medium of the hydropneumatic spring (45) being identical, **characterized in that** the suspension system has a common pressure medium pump (15) for the spring collar adjustment means (9; 11; 45-63) and the supply of hydraulic medium for the hydropneumatic spring (45).

**2.** Suspension system according to Claim 1, **characterized in that** the suspension system (1) has at least two pressure medium lines to the adjustable assemblies (49; 51), an outflow line (53) and a pump line (47), it being possible for all the lines (47-53) to be actuated by way of a switching valve arrangement (57-63; 83).

**3.** Suspension system according to Claim 1, **characterized in that** the switching valve arrangement (57-63) has separate switching valves (57-63) at least for two pressure medium lines (47-53).

**4.** Suspension arrangement according to Claim 1, **characterized in that** the switching valve arrangement is formed by a switching valve block (83).

**5.** Suspension arrangement according to Claim 1, **characterized in that** a pressure medium line (49) between an annular cylinder (11) and a storage vessel (17) is equipped with a throttle (87) which is active at least in the flow direction to a storage vessel (17) .

**6.** Suspension system according to Claim 1, **characterized in that** the spring collar (7) can be adjusted against an extension stop (37).

**7.** Suspension system according to Claim 1, **characterized in that** the axially movable spring collar (7) has a stepped geometry (73) which, with a complementary stepped geometry (69) of the spring support (3), forms an annular cylinder (11) which is filled with pressure medium.

**8.** Suspension system according to Claim 7, **characterized in that** the axially movable spring collar (7) supports two annular seals (77; 79) which are spaced apart axially and seal the annular cylinder (11) on the end side.

**9.** Suspension system according to Claim 1, **characterized in that** the suspension system has priority switching for the pressure medium supply of the adjustable spring collar (7).

**10.** Suspension system according to Claim 1, **characterized in that** the suspension system (1) has a level sensor (67) for detecting the ride height position.

**11.** Suspension system according to Claim 1, **characterized in that** the spring support (3) is configured as a vibration damper.

**12.** Suspension system according to Claim 11, **characterized in that** the vibration damper has at least one adjustable damper valve (29).

**13.** Method for operating a suspension system according to Claim 1, **characterized in that** the spring rate of the hydropneumatic spring (45) is kept constant in the case of a constant loading and a changing driving situation.

**Revendications**

1.  Système de suspension (1), comprenant un support de ressort (3) pour un ressort de suspension de véhicule (5), une coupelle de ressort (7) supportant le ressort de suspension de véhicule (5) pouvant être ajustée en position arbitrairement par une alimentation en fluide sous pression (47-63) dans l'optique d'ajuster l'assiette d'une carrosserie de véhicule, le support de ressort (3) étant réalisé sous forme de ressort hydropneumatique (45) dont le volume hydraulique peut également être ajusté par rapport à un élément accumulateur pneumatique (43), le fluide sous pression pour le réglage de la coupelle de ressort (9 ; 11) et le fluide hydraulique du ressort hydropneumatique (45) étant identiques,
    **caractérisé en ce que** le système de suspension pour le réglage de la coupelle de ressort (9 ; 11 ; 45-63) ainsi que pour l'alimentation en fluide hydraulique pour le ressort hydropneumatique (45) présente une pompe à fluide sous pression commune (15) .

2.  Système de suspension selon la revendication 1, **caractérisé en ce que** le système de suspension (1) présente au moins deux conduites de fluide sous pression conduisant aux unités réglables (49 ; 51), une conduite d'évacuation (53) et une conduite de pompe (47), toutes les conduites (47-53) pouvant être commandées par un agencement de soupapes de commutation (57-63 ; 83).

3.  Système de suspension selon la revendication 1, **caractérisé en ce que** l'agencement de soupapes de commutation (57-63) présente des soupapes de commutation séparées (57-63) au moins pour deux conduites de fluide sous pression (47-53).

4.  Système de suspension selon la revendication 1, **caractérisé en ce que** l'agencement de soupapes de commutation est formé par un bloc de soupapes de commutation (83).

5.  Système de suspension selon la revendication 1, **caractérisé en ce qu'**une conduite de fluide sous pression (49) entre un cylindre annulaire (11) et un réservoir (17) est munie d'un étranglement (87) agissant au moins dans la direction d'écoulement vers un réservoir (17).

6.  Système de suspension selon la revendication 1, **caractérisé en ce que** la coupelle de ressort (7) peut être déplacée contre une butée de sortie (37) .

7.  Système de suspension selon la revendication 1, **caractérisé en ce que** la coupelle de ressort (7) déplaçable axialement présente une géométrie étagée (73) qui, avec une géométrie complémentaire étagée (69) du support de ressort (3), forme un cylindre annulaire (11) rempli de fluide sous pression.

8.  Système de suspension selon la revendication 7, **caractérisé en ce que** la coupelle de ressort (7) déplaçable axialement porte deux joints d'étanchéité annulaires espacés axialement (77 ; 79) qui étanchéifient le cylindre annulaire (11) au niveau de ses extrémités.

9.  Système de suspension selon la revendication 1, **caractérisé en ce que** le système de suspension présente un circuit prioritaire pour l'alimentation en fluide sous pression de la coupelle de ressort réglable (7).

10. Système de suspension selon la revendication 1, **caractérisé en ce que** le système de suspension (1) présente, pour la détection de la position d'assiette, un capteur de mesure de niveau en hauteur (67).

11. Système de suspension selon la revendication 1, **caractérisé en ce que** le support de ressort (3) est réalisé sous forme d'amortisseur d'oscillations.

12. Système de suspension selon la revendication 11, **caractérisé en ce que** l'amortisseur d'oscillations présente au moins une soupape d'amortissement réglable (29).

13. Procédé pour faire fonctionner un système de suspension selon la revendication 1, **caractérisé en ce que** le ressort hydropneumatique (45) est maintenu constant en termes de raideur de ressort pour une charge constante et une situation de conduite variable.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4231641 A1
- GB 2164417 A

- US 6119831 A